# FASCICULE DE BREVET EUROPEEN

(11) **EP 2 132 730 B1**
(45) Date de publication et mention de la délivrance du brevet: **07.10.2015**
(21) Numéro de dépôt: 08788087.8
(22) Date de dépôt: 28.03.2008
(51) Int. Cl.: G10K 11/172, F02C 7/045, F02C 7/24

(54) **PROCEDE DE REALISATION D'UNE STRUCTURE ACOUSTIQUEMENT RESISTIVE, STRUCTURE ACOUSTIQUEMENT RESISTIVE AINSI OBTENUE ET REVETEMENT UTILISANT UNE TELLE STRUCTURE**
VERFAHREN ZUR HERSTELLUNG EINER SCHALLBESTÄNDIGEN STRUKTUR, DARAUS GEWONNENE SCHALLBESTÄNDIGE STRUKTUR UND AUSSENHAUT MIT EINER SOLCHEN STRUKTUR
METHOD FOR PRODUCING AN ACOUSTICALLY RESISTIVE STRUCTURE, RESULTING ACOUSTICALLY RESISTIVE STRUCTURE AND SKIN USING ONE SUCH STRUCTURE

(30) Priorité: 04.04.2007 FR 0754275
(43) Date de publication de la demande: 16.12.2009
(73) Titulaire: Airbus Opérations SAS, 31060 Toulouse (FR)
(72) Inventeur: LALANE, Jacques, F-31650 Saint Orens De Gameville (FR); MENIER, Christophe, F-44640 Saint Jean De Boiseau (FR); BOSSIS, Jean Christophe, F-44140 Montbert (FR); POIGNONEC, Jean Marc, F-44360 Cordemais (FR)
(74) Mandataire: Fantin, Laurent
(86) Numéro de dépôt international: PCT/FR2008/050561
(87) Numéro de publication internationale: WO 2008/135702

(56) Documents cités:
- EP-A- 0 911 803
- EP-A- 1 764 399
- DE-U1-202004 018 241
- US-A- 3 329 740
- US-A- 4 687 053
- US-A- 5 747 573

## Description

La présente invention se rapporte à un procédé de réalisation d'une structure acoustiquement résistive qui, combinée à d'autres couches, permet d'obtenir un revêtement pour le traitement acoustique plus particulièrement destiné à être rapporté sur les surfaces d'une nacelle d'un aéronef afin de réduire une partie du bruit émis par le turboréacteur disposé dans ladite nacelle.

Un ensemble propulsif d'aéronef comprend une nacelle dans laquelle est disposée de manière sensiblement concentrique une motorisation entraînant une soufflante montée sur son arbre.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure de la nacelle et la paroi extérieure de la motorisation.

Le bruit émis par l'ensemble propulsif se compose d'une part du bruit de jet, produit à l'extérieur des conduits suite au mélange des différents écoulements d'air et gaz brûlés, et d'autre part, du bruit généré par les parties internes, dit bruit interne, produit par la soufflante, les compresseurs, les turbines et la combustion qui se propage à l'intérieur des conduits.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits, des revêtements visant à absorber une partie de l'énergie sonore, notamment en utilisant le principe des résonateurs d'Helmholtz. De manière connue, ce revêtement acoustique, également appelé panneau acoustique, comprend de l'extérieur vers l'intérieur une structure acoustiquement résistive, une structure alvéolaire et une couche réflectrice.

Par couche, on entend une ou plusieurs couches de même nature ou non.

La structure acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche. Généralement, la structure acoustiquement résistive comprend au moins une couche poreuse et au moins une structure de renfort.

La couche poreuse doit permettre de rendre le traitement acoustique linéaire et de piéger les ondes acoustiques dans les cellules Helmholtz formées par la structure alvéolaire.

Selon un mode de réalisation, la couche poreuse est un tissu métallique, notamment un grillage inoxydable connu de l'homme du métier.

Ce type de tissu a pour avantage d'avoir une résistance mécanique importante même pour des épaisseurs très faibles, de l'ordre de 1 à 2 dixièmes de millimètre, supérieure à celle d'un matériau synthétique.

Cette résistance mécanique importante est nécessaire car ce tissu placé au niveau de la surface en contact direct avec les écoulements aérodynamiques peut être érodé par des particules solides telles que des grains de sables et des petites pierres, ou être impacté par des morceaux de glace ou des oiseaux éventuellement aspirés qui, avec la vitesse, peuvent provoquer des dégradations. Selon un autre avantage, ce tissu métallique est un excellent conducteur pour la foudre balayante.

La structure de renfort se présente sous la forme d'une plaque en composite ou métallique dans laquelle sont ménagés des orifices de section plus ou moins importante. Selon un mode de réalisation, la structure de renfort se présente sous la forme d'une tôle avec des perforations oblongues, rondes. En variante, la tôle pourrait comprendre des micro-perforations de diamètre de l'ordre de 0,05 à 1,2 mm.

Une structure de renfort et un tissu d'amortissement métalliques sont préférés car ils permettent d'obtenir une grande résistance mécanique nécessaire, notamment lorsque la structure acoustiquement résistive est rapportée dans des zones fortement sollicitées telles qu'un bord d'attaque d'entrée d'air d'une nacelle.

De plus, ces éléments métalliques assurent une excellente diffusion thermique améliorant l'efficacité du traitement du givre nécessaire au niveau de l'entrée d'air d'une nacelle.

Pour assembler la couche poreuse et la structure de renfort, on utilise le collage qui permet d'obtenir une surface lisse, donc une meilleure aérodynamique, et de ne pas trop augmenter la masse embarquée contrairement aux autres moyens de fixation tels que les rivets, vis ou analogue. De plus, le collage permet d'assembler des matériaux différents, des éléments de différentes épaisseurs et d'obtenir une meilleure répartition des contraintes.

Selon un mode de réalisation, on utilise des résines thermoplastiques thermostables, telles que celle des familles des polyétherimides (PEI), des polyétheréthercétones (PEEK), des polyphénylénesulfones (PPS), des polyamides (PA) et le polyéthylènetéréphtalate (PET), permettant d'obtenir des tenues à des expositions de longue durée à des températures comprises entre 300°C et 400°C.

La demande de brevet FR-2.826.168 au nom du demandeur décrit des procédés de réalisation de couche acoustiquement résistive.

Préalablement à l'assemblage des éléments, la structure de renfort est perforée ou micro-perforée puis nettoyée et préparée afin que la colle adhère correctement à ladite structure de renfort.

En suivant, on dispose entre la structure de renfort préparée et la couche poreuse un film de colle d'épaisseur constante, non adhésif à froid. Le film est de préférence découpé selon les zones ouvertes de la structure de renfort afin de pas encoller lesdites zones et obturer au droit des zones ouvertes les mailles du tissu utilisé comme couche poreuse.

Selon les besoins, ces éléments peuvent être éventuellement formés ou pliés.

En suivant, les différents éléments sont chauffés afin d'activer la colle et pressés. Après refroidissement, on obtient un assemblage résistant de la structure de renfort et de la couche poreuse. Cet assemblage est d'autant plus résistant que la colle a une épaisseur constante et minime sur toute la surface de la structure de renfort.

Malgré tout le soin apporté lors de la réalisation de la structure d'amortissement acoustique, le résultat n'est pas optimal pour les raisons suivantes :
Les deux éléments à assembler n'étant plus plans, les épaisseurs de colle peuvent varier de quelques centièmes à 1 mm ce qui se traduit par un caractère non homogène de la liaison entre la structure de renfort et la couche poreuse, augmentant le risque d'un délaminage important.

Par ailleurs, les excès de colle ont tendance à fluer vers les zones perforées ou micro-perforées sur la couche poreuse, ce qui obstrue les mailles du tissu utilisé comme couche poreuse et réduit considérablement l'efficacité du traitement acoustique.

Enfin, la découpe du film de colle et son positionnement par rapport à la structure de renfort afin de faire coopérer les zones ouvertes dudit film et de ladite structure de renfort sont d'autant plus difficiles à mettre en oeuvre que la forme des éléments à assembler est complexe.

Le document EP 0 911 803 A décrit une structure acoustiquement résistive comprenant une couche poreuse métallique et une structure de renfort également métallique assemblées par une colle. La perforation de la structure de renfort est réalisée avant l'application de la colle. Le document US 3 329 740 A propose l'utilisation d'une colle amorphe pour assembler deux surfaces métalliques. Et le document DE 20 2004 018 241 montre la perforation d'une couche de renfort après son encollage pour éviter un remplissage des perforations par la colle.

Aussi, la présente invention vise à pallier les inconvénients de l'art antérieur en proposant un procédé de réalisation d'une structure acoustiquement résistive permettant d'améliorer l'adhérence entre les éléments de ladite structure et de ne pas altérer les caractéristiques d'amortissement acoustique de ladite structure.

A cet effet, l'invention a pour objet un procédé de réalisation d'une structure acoustiquement résistive susceptible d'être rapportée sur une structure alvéolaire de manière à obtenir un revêtement pour le traitement acoustique, ladite structure acoustiquement résistive comprenant au moins une couche poreuse et au moins une structure de renfort assemblées par collage, caractérisé en ce qu'il consiste à appliquer une colle de type amorphe sur ladite au moins une structure de renfort, perforer ou micro-perforée la structure de renfort après l'application de la colle de type amorphe, ladite colle n'étant pas altérée au niveau des pourtours des perforations ou des micro-perforations, et appliquer contre la face de la structure de renfort revêtue de colle de type amorphe ladite au moins une couche poreuse.

La nature amorphe de la colle autorise une succession de montées en température et de refroidissements qui n'altère pas les caractéristiques de ladite colle, ce qui permet un assemblage pas à pas, limite les risques d'obturation des mailles de la couche poreuse au droit des zones ouvertes de la structure de renfort et garantit une épaisseur constante et optimale de la colle. D'autres caractéristiques et avantages ressortiront de la description qui va suivre de l'invention, description donnée à titre d'exemple uniquement, en regard des dessins annexés sur lesquels :
- la figure 1 est une vue en perspective illustrant un ensemble propulsif d'un aéronef,
- la figure 2 est une coupe longitudinale illustrant l'entrée d'air d'une nacelle selon une première variante,
- la figure 3 est une coupe longitudinale illustrant l'entrée d'air d'une nacelle selon une autre variante,
- la figure 4A est une coupe illustrant un revêtement acoustique selon une première variante,
- la figure 4B est une coupe illustrant un revêtement acoustique selon une deuxième variante,
- la figure 4C est une coupe illustrant un revêtement acoustique selon une troisième variante,
- la figure 5A est une vue en élévation d'une couche acoustiquement résistive selon une première configuration des orifices ménagés sur la structure de renfort,
- la figure 5B est une vue en élévation d'une couche acoustiquement résistive selon une autre configuration des orifices ménagés sur la structure de renfort, et
- les figures 6A à 6C sont un synoptique illustrant de manière schématique différentes étapes du procédé de réalisation selon l'invention.

La présente invention est maintenant décrite appliquée à une entrée d'air d'un ensemble propulsif d'un aéronef. Cependant, elle peut s'appliquer au niveau des différentes zones d'un aéronef au niveau desquelles un traitement acoustique est opéré, par exemple le bord d'attaque des ailes ou tout autre endroit soumis à de fortes températures, comme proche du moteur ou proche des pales moteur. Pour la suite de la description, on entend par givre aussi bien le givre que la glace, de toutes natures, de toutes structures et de toutes les épaisseurs.

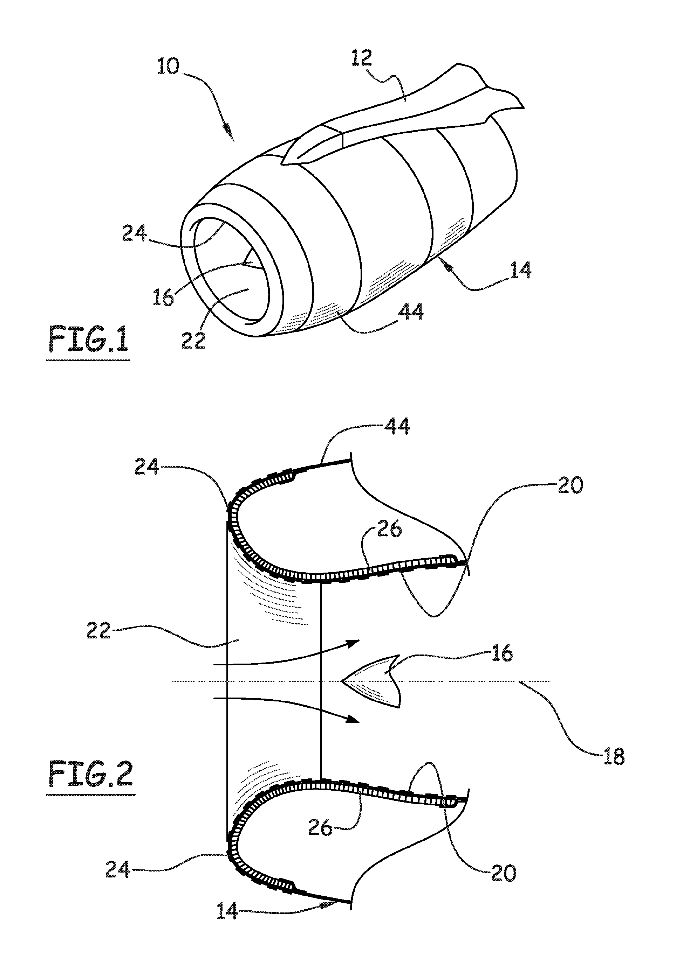

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. L'axe longitudinal de la nacelle est référencé 18.

La nacelle 14 comprend une paroi intérieure 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation.

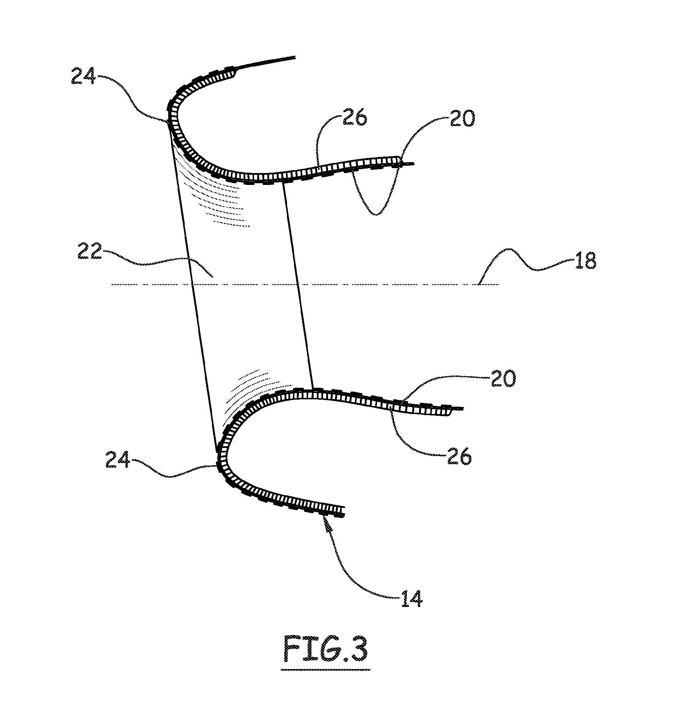

La partie sommitale 24 de l'entrée d'air 22 décrit une forme sensiblement circulaire qui s'étend dans un plan qui peut être sensiblement perpendiculaire à l'axe longitudinal 18, comme illustré sur la figure 2, ou non perpendiculaire, avec la partie sommitale située à 12h légèrement avancée, comme illustré sur la figure 3. Toutefois, d'autres formes d'entrée d'air peuvent être envisagées.

Pour la suite de la description, on entend par surface aérodynamique l'enveloppe de l'aéronef en contact avec le flux aérodynamique.

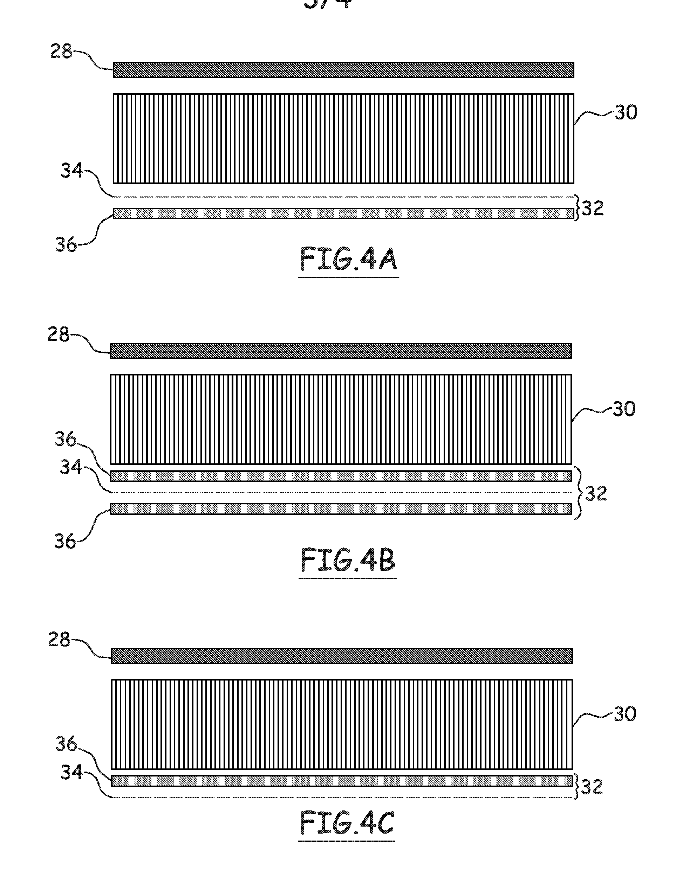

Pour limiter l'impact des nuisances, un revêtement 26 visant à absorber une partie de l'énergie sonore, notamment en utilisant le principe des résonateurs d'Helmholtz est prévu notamment au niveau des surfaces aérodynamiques. De manière connue, ce revêtement acoustique, également appelé panneau acoustique, comprend de l'intérieur vers l'extérieur une couche réflectrice 28, au moins une structure alvéolaire 30 et une structure acoustiquement résistive 32, comme illustré sur les figures 4A à 4C.

En variante, le revêtement acoustique 26 pourrait comprendre plusieurs structures alvéolaires par des structures acoustiquement résistives appelées septum.

Selon les variantes, le revêtement acoustique peut s'étendre sur la surface du conduit secondaire ainsi que vers l'avant et recouvrir le bord d'attaque ou lèvre de l'entrée d'air de la nacelle, comme illustré sur les figures 2 et 3, ainsi qu'une partie de la surface extérieure.

Selon un mode de réalisation, la couche réflectrice 28 peut se présenter sous la forme d'une tôle métallique ou d'une peau constituée d'au moins une couche de fibres tissées ou non tissées noyées dans une matrice en résine.

La structure alvéolaire 30 peut se présenter sous la forme d'un nid d'abeilles métallique ou en matériau composite, par exemple une structure en nid d'abeilles commercialisées sous l'appellation Nida Nomex. En variante, la structure alvéolaire pourrait être obtenue par d'autres moyens, par exemple, par l'assemblage de bandes qui s'entrecroisent de manière à délimiter des cellules ouvertes à chacune de leurs extrémités.

La couche réflectrice 28 et la structure alvéolaire 30 ne sont pas plus détaillées car elles sont connues de l'homme du métier.

Une couche acoustiquement résistive 32 comprend au moins une structure poreuse ayant un rôle dissipatif, transformant partiellement l'énergie acoustique de l'onde sonore la traversant en chaleur.

Selon un mode de réalisation, la structure acoustiquement résistive 32 comprend au moins une couche poreuse 34 et au moins une structure de renfort 36 conférant à la structure acoustiquement résistive les caractéristiques mécaniques requises.

Selon une première variante illustrée en figure 4A, la structure acoustiquement résistive 32 peut comprendre une couche poreuse 34 intercalée entre la structure alvéolaire et une structure de renfort 36.

Selon une deuxième variante illustrée en figure 4B, la structure acoustiquement résistive 32 peut comprendre une couche poreuse 34 intercalée entre deux structure de renfort 36.

Selon une autre variante illustrée en figure 4C, la structure acoustiquement résistive 32 peut comprendre une structure de renfort 36 intercalée entre la structure alvéolaire 30 et une couche poreuse 34.

La couche poreuse 34 se présente sous la forme d'un tissu métallique tel que par exemple un Wiremesh. Selon un mode de réalisation, le tissu d'amortissement acoustique est métallique, notamment un grillage inoxydable connu de l'homme du métier.

La structure de renfort 36 se présente sous la forme d'une plaque métallique comportant des ouvertures 38 ou des micro-perforations assurant le passage des ondes acoustiques à travers ladite structure de renfort. Selon les cas, la structure de renfort peut être en alliage d'aluminium ou en alliage de titane. Les alliages de titane sont intéressants en raison de leur rapport résistance/masse important, de leur faible coefficient de dilatation et de leur résistance aux températures élevées. Ainsi, la structure acoustiquement résistive peut résister à des températures élevées, de l'ordre de 380°C en utilisant une structure de renfort en alliage de titane et une colle résistante auxdites températures.

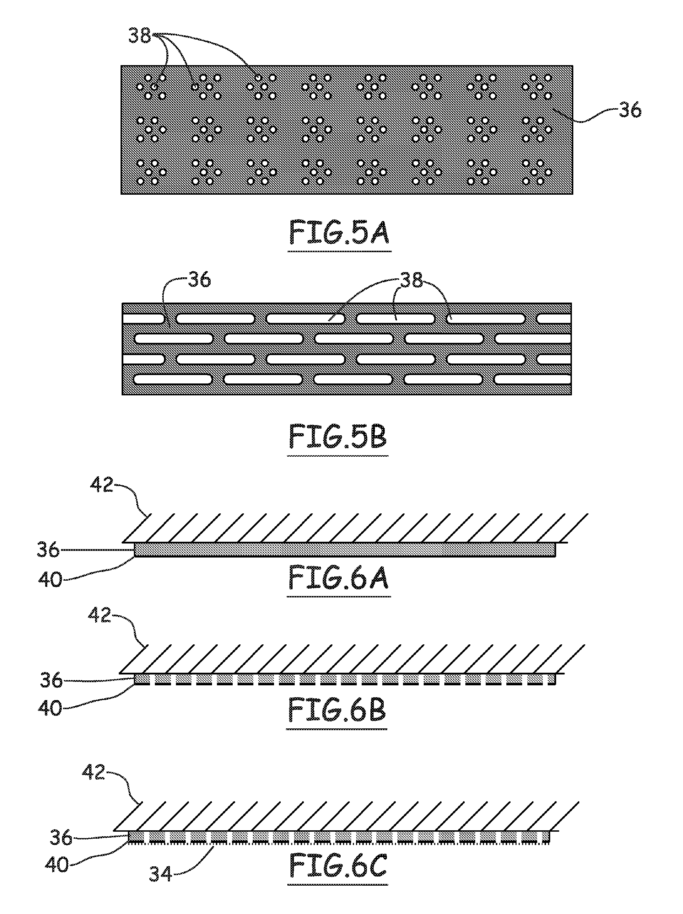

La structure de renfort 36 comprend des ouvertures 38 ou microperforations de différentes formes ou dimensions, par exemple des trous circulaires regroupés comme illustré sur la figure 5A ou des formes oblongues comme illustré sur la figure 5B. Les formes et les dimensions des ouvertures 38, sont déterminées de manière à réduire les perturbations sur les écoulements du flux d'air, à assurer la résistance mécanique requise, notamment afin de résister au délaminage, et à permettre le passage des ondes sonores pour conférer un bon rendement au revêtement acoustique.

Dans tous les cas, la structure 32 acoustiquement résistive comprend des zones dites ouvertes susceptibles de laisser passer les ondes acoustiques et d'autres dites fermées ou pleines ne laissant pas passer les ondes acoustiques mais destinées à assurer la résistance mécanique de ladite couche. Cette couche acoustiquement résistive se caractérise notamment par un taux de surface ouverte qui varie essentiellement en fonction du moteur, des composants constituant ladite couche.

Préalablement à l'assemblage avec la couche poreuse, la structure de renfort subit un ou plusieurs traitements de surface ayant au moins l'un des objectifs suivants :
- Eliminer les saletés, pollutions, huiles et lubrifiants, notamment de laminage, étirage ;
- Eliminer les couches adsorbées ;
- Eliminer les couches plus ou moins fragiles (oxydes naturels, oxydes hydratés) jusqu'à retrouver un métal nu, parfaitement propre ;
- Augmenter la mouillabilité ;
- Augmenter la rugosité de surface, pour augmenter l'accrochage mécanique ;
- Créer une couche réactive d'oxyde en surface ou tout autre couche solide pour augmenter l'adhérence de la colle.

Selon un mode de réalisation, la structure de renfort subit un sablage après dégraissage. De préférence, on utilise des grenailles très fines pour obtenir une microstructure.

Selon l'invention, pour assembler la structure de renfort et la couche poreuse, on utilise une colle amorphe.

Par colle, on entend un produit chimique qui permet d'assembler au moins deux éléments.

La propriété amorphe de la colle permet de pouvoir la monter en température et la refroidir, sans modifier sa structure chimique et donc ses caractéristiques structurales. Cette caractéristique permet un encollage par étape, afin de vérifier la qualité de l'encollage. Lors des variations de température, on obtient un vieillissement physique ou relaxation structurale, un phénomène réversible propre à la nature amorphe de la colle, par opposition à un vieillissement chimique qui induit une évolution irréversible des pontages entre chaînes ou une rupture des liaisons.

Ainsi, du fait que la colle n'est pas altérée par des montées en température et des refroidissements successifs, il est possible d'effectuer l'opération d'assemblage pas à pas afin de mesurer au fur et à mesure la qualité de l'encollage. De plus, il est possible de procéder morceau par morceau grâce à la propriété amorphe de la colle, pour les zones en forme auparavant difficilement encollables, comme par exemple le bord d'attaque d'une entrée d'air.

Selon une autre caractéristique de l'invention, la colle est de type thermocollante. De préférence, elle se présente sous forme d'un film 40 d'épaisseur constante, non adhésif à froid qui est réactif à la chaleur, ledit film étant appliqué sur l'une des surfaces à encoller.

Selon l'invention, les perforations ou micro-perforations pratiquées sur la structure de renfort 36 sont réalisées une fois l'encollage avec la colle amorphe. Ainsi, on obtient une épaisseur de colle constante et minimale sur toute la surface de la structure de renfort ce qui garantit une meilleure qualité d'assemblage.

Par ailleurs, cette solution permet d'éviter le fluage de la colle en direction des zones ouvertes et l'obturation des mailles dans ces zones afin de ne pas altérer les caractéristiques acoustiques de la structure acoustiquement résistive.

Selon un mode de réalisation, on applique un film de colle 40 sur la structure de renfort 36, comme illustré en figure 6A. Avantageusement, la structure de renfort et le film de colle sont disposés sur un moule 42 faisant l'objet de presse.

L'ensemble est ensuite placé dans un four ou autoclave de grandes dimensions qui permet une élévation de température de 100 à 300°C afin d'activer la colle, sous une pression de 1 à 15 Bar. La colle amorphe 40 durcit lors du refroidissement sans perdre ses caractéristiques mécaniques et adhésives.

La structure de renfort 36 est ainsi intégralement mouillée. On obtient une épaisseur de colle constante et optimale contrairement à l'art antérieur, ce qui permet d'améliorer les qualités de l'assemblage.

On réalise ensuite les perforations ou micro-perforations comme illustré sur la figure 6B. Lors de cette étape, on note que la structure de renfort et le film de colle sont perforés de manière simultanée si bien que les ouvertures du film de colle et de la structure de renfort coïncident parfaitement. La mise en oeuvre est ainsi grandement simplifiée.

Différentes techniques peuvent être mises en oeuvre pour réaliser les perforations ou micro-perforations. A titre d'exemple, on peut utiliser un faisceau laser ou un faisceau d'électron. L'éventuel échauffement produit lors de l'usinage n'altère pas la colle dans la mesure où la colle utilisée est amorphe. La colle n'étant pas altérée au niveau des pourtours des zones ouvertes, on obtient un pouvoir adhérent important dans ces zones qui sont fortement sollicitées. Comme illustré sur la figure 6C, la couche poreuse 34 est alors appliquée sur la colle 40, plaquée par l'intermédiaire d'un moule ou autre. L'ensemble est ensuite placé dans un four ou autoclave de grandes dimensions qui permet une élévation de température de 100 à 300°C afin d'activer la colle, sous une pression de 1 à 15 Bar. Eventuellement, la dépose de la couche poreuse peut se faire morceau par morceau, la colle étant activée au fur et à mesure pour chaque morceau de couche poreuse. Cette solution permet de réaliser un encollage de qualité satisfaisante même dans les zones de formes complexes telles que le bord d'attaque d'une entrée d'air qui sont généralement les zones les plus sollicitées. La nature amorphe de la colle autorise une succession de montées en température et de refroidissements qui n'altère pas les caractéristiques de ladite colle, ce qui permet un assemblage pas à pas, limite les risques d'obturation des mailles de la couche poreuse au droit des zones ouvertes de la structure de renfort et garantit une épaisseur constante et optimale de la colle.

## Revendications

1. Procédé de réalisation d'une structure acoustiquement résistive susceptible d'être rapportée sur une structure alvéolaire de manière à obtenir un revêtement pour le traitement acoustique, ladite structure acoustiquement résistive (32) comprenant au moins une couche poreuse (34) et au moins une structure de renfort (36) assemblées par collage, **caractérisé en ce qu'**il consiste à :
- appliquer une colle de type amorphe sur ladite au moins une structure de renfort (36),
- perforer ou micro-perforée la structure de renfort (36) après l'application de la colle de type amorphe, ladite colle n'étant pas altérée au niveau des pourtours des perforations ou des micro-perforations, et
- appliquer contre la face de la structure de renfort (36) revêtue de colle de type amorphe ladite au moins une couche poreuse.

2. Procédé de réalisation d'une structure acoustiquement résistive selon la revendication 1, **caractérisé en ce que** la dépose de la couche poreuse (34) est faite morceau par morceau, la colle étant activée au fur et à mesure pour chaque morceau de couche poreuse.

3. Procédé de réalisation d'une structure acoustiquement résistive selon la revendication 1 ou 2, **caractérisé en ce qu'**on utilise une colle thermostable.

4. Procédé de réalisation d'une structure acoustiquement résistive selon la revendication 1 ou 2, **caractérisé en ce qu'**on utilise un film de colle de type amorphe non adhésif à froid.

5. Procédé de réalisation d'une structure acoustiquement résistive selon l'une quelconque des revendications précédentes, **caractérisé en ce qu'**il comprend les étapes consistant à :
- disposer la structure de renfort (36) et le film (40) sur un moule (42) et soumettre l'ensemble à une élévation de température de 100 à 300°C afin d'activer la colle, sous une pression de 1 à 15 Bar,
- après refroidissement, réaliser des perforations ou micro perforations au niveau de la structure de renfort et de la couche de colle, et
- disposer la couche poreuse (34) et soumettre l'ensemble à une élévation de température de 100 à 300°C afin d'activer la colle, sous une pression de 1 à 15 Bar.

6. Structure acoustiquement résistive susceptible d'être rapportée sur une structure alvéolaire de manière à obtenir un revêtement pour le traitement acoustique, ladite structure acoustiquement résistive (32) comprenant au moins une couche poreuse (34) et au moins une structure de renfort (36) assemblées avec une colle de type amorphe à partir du procédé selon l'une des revendications 1 à 4.

7. Revêtement pour le traitement acoustique comprenant de l'intérieur vers l'extérieur une couche réflectrice (28), au moins une structure alvéolaire (30) et une structure acoustiquement résistive (32), ladite structure acoustiquement résistive (32) comprenant au moins une couche poreuse (34) et au moins une structure de renfort (36) assemblées avec une colle de type amorphe à partir du procédé selon l'une des revendications 1 à 4.

8. Nacelle comprenant un revêtement pour le traitement acoustique comprenant de l'intérieur vers l'extérieur une couche réflectrice (28), au moins une structure alvéolaire (30) et une structure acoustiquement résistive (32), ladite structure acoustiquement résistive (32) comprenant au moins une couche poreuse (34) et au moins une structure de renfort (36) assemblées avec une colle de type amorphe à partir du procédé selon l'une des revendications 1 à 4.

## Patentansprüche

1. Verfahren zur Herstellung einer schalldämpfenden Struktur, die dazu geeignet ist, auf eine Kammerstruktur aufgebracht zu werden, um eine Verkleidung für die Schallbehandlung zu erhalten, wobei die schalldämpfende Struktur (32) wenigstens eine poröse Schicht (34) und wenigstens eine Verstärkungsstruktur (36) aufweist, die durch Kleben zusammengefügt sind, **dadurch gekennzeichnet, dass** dieses darin besteht:
- einen Kleber von der amorphen Art auf die wenigstens eine Verstärkungsstruktur (36) aufzubringen,
- die Verstärkungsstruktur (36) nach der Anwendung des Klebers von der amorphen Art zu perforieren oder zu mikroperforieren, wobei der Kleber im Umgebungsbereich der Perforation oder der Mikroperforation nicht geändert wird, und
- die wenigstens eine poröse Schicht an der mit dem Kleber von der amorphen Art bedeckten Seite der Verstärkungsstruktur (36) anzubringen.

2. Verfahren zur Herstellung einer schalldämpfenden Struktur nach Anspruch 1, **dadurch gekennzeichnet, dass** das Aufbringen der porösen Schicht (34) Stück für Stück durchgeführt wird, wobei der Kleber nach und nach für das jeweilige Stück der porösen Schicht aktiviert wird.

3. Verfahren zur Herstellung einer schalldämpfenden Struktur nach Anspruch 1 oder 2, **dadurch gekennzeichnet, dass** eine thermostabiler Kleber verwendet wird.

4. Verfahren zur Herstellung einer schalldämpfenden Struktur nach Anspruch 1 oder 2, **dadurch gekennzeichnet, dass** eine im kalten Zustand nicht abhängige Klebeschicht von der amorphen Art verwendet wird.

5. Verfahren zur Herstellung einer schalldämpfenden Struktur nach einem der vorhergehenden Ansprüche, **dadurch gekennzeichnet, dass** dieses die Verfahrensschritte umfasst, die darin bestehen:
- die Verstärkungsstruktur (36) und die Schicht (40) auf eine Pressform (42) aufzubringen und die Gesamtheit einer Temperaturerhöhung von 100 bis 300°C zu unterziehen, um den Kleber bei einem Druck von 1 bis 15 Bar zu aktivieren,
- die Perforationen oder Mikroperforationen nach einem Abkühlen im Bereich der Verstärkungsstruktur und der Klebeschicht auszubilden und
- die poröse Schicht (34) aufzubringen und die Gesamtheit einer Temperaturerhöhung von 100 bis 300°C zu unterziehen, um den Kleber bei einem Druck von 1 bis 15 Bar zu aktivieren.

6. Schalldämpfende Struktur, die sich dazu eignet, auf eine Kammerstruktur aufgebracht zu werden, um eine Verkleidung für die Schallbehandlung zu erhalten, wobei die schalldämpfende Struktur (32) wenigstens eine poröse Schicht (34) und wenigstens eine Verstärkungsstruktur (36) aufweist, die mit einem Kleber von der amorphen Art mit Hilfe eines Verfahrens nach einem der Ansprüche 1 bis 4 zusammengefügt sind.

7. Verkleidung für die Schallbehandlung, die von innen nach außen wenigstens eine reflektierende Schicht (28), wenigstens eine Kammerstruktur (30) und eine schalldämpfende Struktur (32) aufweist, wobei die schalldämpfende Struktur (32) wenigstens eine poröse Schicht (34) und wenigstens eine Verstärkungsstruktur (36) aufweist, die mit einem Kleber von der amorphen Art mit Hilfe eines Verfahrens nach einem der Ansprüche 1 bis 4 zusammengefügt sind.

8. Gondel mit einer Verkleidung für die Schallbehandlung, die von innen nach außen eine reflektierende Schicht (28), wenigstens eine Kammerstruktur (30) und eine schalldämpfende Struktur (32) aufweist, wobei die schalldämpfende Struktur (32) wenigstens eine poröse Schicht (34) und wenigstens eine Verstärkungsstruktur (36) aufweist, die mit einem Kleber von der amorphen Art mit Hilfe des Verfahrens nach einem der Ansprüche 1 bis 4 zusammengefügt sind.

## Claims

1. Process for the production of an acoustically resistive structure that can be inserted in an alveolar structure so as to obtain a coating for the acoustic treatment, whereby said acoustically resistive structure (32) comprises at least one porous layer (34) and at least one reinforcement structure (36) assembled by gluing, **characterized in that** it consists in:
- Applying an amorphous-type adhesive on said at least one reinforcement structure (36),
- Perforating or micro-perforating the reinforcement structure (36) after the application of the amorphous-type adhesive, said adhesive not being altered at the peripheries of perforations or micro-perforations, and
- Applying against the face of the reinforcement structure (36) that is coated with amorphous-type adhesive said at least one porous layer.

2. Process for the production of an acoustically resistive structure according to claim 1, wherein the deposition of the porous layer (34) is done piece by piece, whereby the adhesive is activated for each piece of porous layer as the process proceeds.

3. Process for the production of an acoustically resistive structure according to claim 1 or 2, wherein a thermostable adhesive is used.

4. Process for the production of an acoustically resistive structure according to claim 1 or 2, wherein an amorphous-type adhesive film that is not adhesive under cold conditions is used.

5. Process for the production of an acoustically resistive structure according to any of the preceding claims, wherein it comprises the stages that consist in:
- Arranging the reinforcement structure (36) and the film (40) on a mold (42) and subjecting the unit to a rise in temperature of 100 to 300°C so as to activate the adhesive, under a pressure of 1 to 15 bar,
- After cooling, producing perforations or micro-perforations at the reinforcement structure and the adhesive layer, and
- Arranging the porous layer (34) and subjecting the unit to a temperature elevation of 100 to 300°C so as to activate the adhesive, under a pressure of 1 to 15 bar.

6. Acoustically resistive structure that is able to be inserted in an alveolar structure so as to obtain a coating for the acoustic treatment, said acoustically resistive structure (32) comprises at least one porous layer (34) and at least one reinforcement structure (36) that are assembled with an amorphous-type adhesive from the process according to one of claims 1 to 4.

7. Coating for the acoustic treatment that comprises - from the inside to the outside - a reflective layer (28), at least one alveolar structure (30), and an acoustically resistive structure (32), whereby said acoustically resistive structure (32) comprises at least one porous layer (34) and at least one reinforcement structure (36) that are assembled with an amorphous-type adhesive from the process according to one of claims 1 to 4.

8. Nacelle that comprises a coating for the acoustic treatment that comprises - from the inside to the outside - a reflective layer (28), at least one alveolar structure (30), and an acoustically resistive structure (32), whereby said acoustically resistive structure (32) comprises at least one porous layer (34) and at least one reinforcement structure (36) that are assembled with an amorphous-type adhesive from the process according to one of claims 1 to 4.
